**Europäisches Patentamt**

**European Patent Office**

**Office européen des brevets**

(11) Numéro de publication: **0 305 262 B1**

(12) **FASCICULE DE BREVET EUROPEEN**

(45) Date de publication de fascicule du brevet: **07.10.92** (51) Int. Cl.5: **C01G 56/00**

(21) Numéro de dépôt: **88402077.7**

(22) Date de dépôt: **10.08.88**

---

(54) **Uranate plutonate d'ammonium, son procédé de préparation et son utilisation pour l'élaboration d'oxyde mixte (U,Pu)02.**

---

(30) Priorité: **14.08.87 FR 8711600**

(43) Date de publication de la demande:
**01.03.89 Bulletin 89/09**

(45) Mention de la délivrance du brevet:
**07.10.92 Bulletin 92/41**

(84) Etats contractants désignés:
**BE DE GB**

(56) Documents cités:
**EP-A- 0 023 585**
**DE-B- 1 180 358**
**FR-A- 1 489 438**
**GB-A- 2 016 431**

(73) Titulaire: **COMMISSARIAT A L'ENERGIE ATO-MIOUE Etablissement de Caractère Scientifique Technique et Industriel**
**31/33, rue de la Fédération**
**F-75015 Paris(FR)**

(72) Inventeur: **Madic, Charles**
**5, Place du Marché**
**FR-94320 Thiais(FR)**
Inventeur: **De Sanoit, Jacques**
**23, Avenue de la Croix du Sud**
**FR-94550 Chevilly Larue(FR)**

(74) Mandataire: **Mongrédien, André et al**
**c/o BREVATOME 25, rue de Ponthieu**
**F-75008 Paris(FR)**

---

## Description

La présente invention a pour objet un uranate plutonate mixte d'ammonium, son procédé de préparation et son utilisation pour l'élaboration d'oxydes mixtes $(U,Pu)O_2$.

De tels oxydes mixtes sont utilisables comme combustibles nucléaires dans des surgénérateurs à neutrons rapides ou dans des réacteurs à eau. Dans le cas des combustibles destinés aux surgénérateurs, la teneur en plutonium de l'oxyde mixte est d'au plus 30% en poids alors que dans le cas des réacteurs à eau, la teneur en plutonium de l'oxyde mixte ne doit pas dépasser 10% en poids.

L'un des principaux critères de qualité des oxydes mixtes utilisables comme combustibles, est leur solubilité à chaud dans des solutions d'acide nitrique, en l'absence d'agents corrosifs tels que les ions fluorure.

En effet, cette propriété est décisive si l'on considère le retraitement ultérieur des combustibles irradiés à base d'oxydes mixtes pour lesquels il est important d'obtenir une dissolution la plus quantitative possible.

On sait que les oxydes mixtes d'uranium et de plutonium présentent une bonne solubilité en milieu nitrique seul si l'oxyde de plutonium est présent dans l'oxyde d'uranium sous forme de solution solide, et l'on connaît différents procédés de production d'oxydes mixtes qui permettent d'atteindre cet objectif.

L'un de ces procédés consiste à mélanger mécaniquement des poudres d'oxyde d'uranium $UO_2$ et d'oxyde de plutonium $PuO_2$ et à fritter ces poudres à très haute température, par exemple à 1700°C, en répétant plusieurs fois ces opérations, c'est-à-dire en broyant le produit fritté et en le soumettant ensuite à un nouveau frittage. Ce procédé est donc d'une mise en oeuvre laborieuse et il nécessite des appareillages complexes.

D'autres procédés pour l'obtention d'oxydes mixtes d'uranium et de plutonium sont basés sur la préparation de composés mixtes d'uranium et de plutonium par précipitation à partir de solutions aqueuses. L'un de ces procédés consiste à précipiter conjointement de l'uranate d'ammonium et de l'hydroxyde de plutonium à partir d'une solution de nitrate d'uranyle et de nitrate de plutonium IV, et à calciner ensuite le précipité sous atmosphère réductrice comme il est décrit dans le brevet US-A-3 287 279 et dans la publication Trans. Ans. Vol. 33 (1979), p. 470-471.

L'inconvénient de ce procédé réside dans le fait que les deux éléments actinides sont présents dans le précipité sous forme de deux composés différents à deux états d'oxydation différents (U VI et Pu IV). Ceci se traduit par une accumulation locale du plutonium qui conduira, après calcination, à de l'oxyde de plutonium insoluble en milieu nitrique seul.

Un autre procédé qui permet d'éviter l'inconvénient décrit ci-dessus, consiste à effectuer une véritable coprécipitation de l'uranium et du plutonium sous forme d'un carbonate double d'uranium VI, de plutonium VI et d'ammonium, comme il est décrit dans le brevet français FR-A-2 419 924. L'intérêt d'un tel procédé est que les éléments uranium et plutonium sont présents dans le même composé au même état d'oxydation. Aussi, après calcination sous atmosphère réductrice du précipité, on obtient un oxyde mixte d'uranium et de plutonium ayant de bonnes caractéristiques.

Néanmoins, ce procédé présente certains inconvénients. En effet, la concentration résiduelle en plutonium et en uranium dans les eaux mères de filtration du précipité est élevée puisqu'elle est voisine de 4 g/l. Par ailleurs, il est nécessaire de maintenir le pH de la solution à une valeur comprise entre 8,4 et 8,6 pour obtenir la coprécipitation, et cette zone ne correspond à aucun tampon de pH. En outre, il est nécessaire d'utiliser deux flux de réactif gazeux qui sont respectivement l'ammoniac et l'anhydride carbonique, dont il faut ajuster les débits relatifs.

La présente invention a précisément pour objet un procédé qui permet de coprécipiter de l'uranium et du plutonium sous forme d'un composé mixte dans lequel l'uranium et le plutonium existent au même état d'oxydation, sans avoir les inconvénients du procédé décrit ci-dessus.

Elle a également pour objet le nouveau composé obtenu par ce procédé, c'est-à-dire l'uranate plutonate d'ammonium de formule :

$$[(U, Pu)O_3]_2 \, [NH_3]_x \, [H_2O]_y$$

composé cristallisé de masse molaire apparente 330g, avec $x+y=5$, et $x$ et $y$ pouvant prendre toute valeur entre 0 et 5.

Le procédé, selon l'invention, de préparation d'uranate plutonate mixte d'ammonium, consiste à neutraliser par l'ammoniac une solution aqueuse d'un sel d'uranium VI et d'un sel de plutonium VI pour précipiter l'uranium et le plutonium sous la forme d'un coprécipité d'uranate plutonate mixte d'ammonium, et à séparer le coprécipité de la solution.

L'obtention d'un tel précipité à partir d'une solution aqueuse de sel d'uranium VI et de plutonium VI est tout-à-fait inattendue.

En effet, on sait qu'une réaction de ce type peut être utilisée pour préparer de l'uranate d'ammonium à partir de solutions aqueuses acides d'uranium VI et cette réaction est très employée dans l'industrie de l'extraction de l'uranium.

En revanche, il est connu depuis longtemps que si l'on applique cette même réaction à une solution aqueuse acide de plutonium VI, on n'obtient pas la formation d'un précipité car le plutonium reste en solution sous forme de complexes hydroxo polymérisés solubles.

Ainsi, dans le procédé de l'invention, la présence d'uranium VI dans la solution favorise la précipitation du plutonium qui coprécipite avec l'uranium VI sous forme d'un composé cristallisé, isomorphe de l'uranate d'ammonium, dans lequel U VI et Pu VI doivent occuper des sites cristallographiques équivalents.

Par ailleurs, le précipité formé peut être facilement séparé de la solution et les quantités d'uranium et de plutonium qui restent en solution représentent moins de 0,2% de la quantité initiale d'uranium et de plutonium.

Le procédé de l'invention est donc tout-à-fait avantageux car il permet d'obtenir facilement un composé mixte d'uranium et de plutonium dans lequel l'uranium et le plutonium sont au même état d'oxydation, et ce composé peut être calciné sous atmosphère réductrice pour donner un oxyde mixte d'uranium et de plutonium présentant des propriétés de solubilité en milieu nitrique seul très intéressantes.

Généralement, les sels d'uranium et de plutonium présents dans la solution aqueuse de départ sont du nitrate d'uranyle et du nitrate de plutonyle.

Une telle solution aqueuse peut être obtenue à partir d'une solution de nitrate d'uranyle et de nitrate de plutonium (IV) en procédant à une oxydation du plutonium IV présent dans cette solution.

Dans ce cas, le procédé comprend les étapes successives suivantes :

a) - préparer une solution de nitrate d'uranyle et de nitrate de plutonium IV,

b) - oxyder le plutonium IV présent dans la solution en plutonium VI, et

c) - neutraliser la solution par addition d'ammoniac pour former un coprécipité d'uranate plutonate d'ammonium.

Dans la première étape, on prépare la solution aqueuse à partir des nitrates correspondants qui sont introduits dans une solution acide, par exemple une solution nitrique ayant une concentration en $HNO_3$ de 1 à 1,5 mol/l. De préférence, la concentration totale en $U + Pu$ de la solution ne dépasse pas 200g/l car on a observé que le rendement de la réaction de précipitation diminue lorsque la teneur en $(U + Pu)$ augmente. Le rapport des nitrates d'uranyle et de plutonium introduits dépend en particulier du type de réacteur auquel est destiné l'oxyde mixte qui pourra être formé ensuite par calcination du précipité. Généralement, on utilise des quantités de nitrates telles que le rapport U/Pu est au moins égal à 3.

Après avoir préparé la solution, on réalise la deuxième étape d'oxydation du Pu (IV) et plusieurs méthodes peuvent être utilisées pour réaliser cette oxydation.

Selon un premier mode de réalisation, on peut effectuer cette oxydation au moyen d'ions $NO_3^-$ à température élevée, le phénomène d'oxydation du plutonium IV en plutonium VI est favorisé par la présence de l'uranium VI en solution.

A titre d'exemple, ceci peut être effectué en distillant à reflux jusqu'à l'azéotrope une solution de $HNO_3$ à une température de 120 à 150°C.

Selon un deuxième mode de réalisation, on peut effectuer l'oxydation du plutonium IV en plutonium VI par électrolyse.

Ceci peut être réalisé directement en introduisant la solution aqueuse de nitrate d'uranyle et de nitrate de plutonium dans une cellule électrolytique séparée en deux compartiments anodique et cathodique par une paroi poreuse, comportant une anode en platine et une cathode en tantale, en appliquant une différence de potentiel suffisamment élevée pour que la réaction d'oxydation du plutonium IV en plutonium VI dont le potentiel normal apparent est de 1,04 volt/ENH puisse se produire sur l'anode. Ceci peut être obtenu en faisant passer un courant constant suffisamment intense dans l'électrolyseur. On peut aussi effectuer indirectement cette oxydation électrolytique en utilisant un médiateur électrochimique, c'est-à-dire un couple oxydoréducteur ayant un potentiel d'oxydoréduction supérieur à celui du couple plutonium IV-plutonium VI.

A titre d'exemple d'un tel couple oxydoréducteur, on peut citer le couple $Ag^+/Ag^{2+}$.

Selon un troisième mode de réalisation, on peut effectuer l'oxydation par voie chimique en ajoutant à la solution un agent oxydant, par exemple de l'oxyde d'argent AgO ou de l'ozone.

Après cette étape d'oxydation, on obtient donc une solution de nitrate de plutonyle et de nitrate d'uranyle.

On forme ensuite à partir de cette solution un précipité d'uranate plutonate mixte d'ammonium en neutralisant la solution, soit par une solution aqueuse d'ammoniaque, soit par de l'ammoniac gazeux, éventuellement dilué dans un gaz inerte tel que l'azote. Généralement, on poursuit l'addition jusqu'à l'obtention d'un pH situé sur le système tampon $NH_4^+/NH_3$, soit un pH allant de 9,2 à 9,3.

Après cette addition, on laisse mûrir le précipité, généralement sous agitation, pendant une durée suffisante qui est d'au moins une heure. On sépare alors le précipité de la solution, généralement par filtration.

Le précipité obtenu peut être ensuite utilisé pour la préparation d'oxydes mixtes $(U,Pu)O_2$. Dans ce cas, on soumet le coprécipité d'uranate plutonate mixte d'ammonium à un séchage, puis on le calcine sous atmosphère réductrice.

Le gaz réducteur utilisé est généralement l'hydrogène et la température de calcination se situe avantageusement dans l'intervalle allant de 650 à 750° C.

L'oxyde mixte obtenu par ce procédé présente une solubilité dans l'acide nitrique 11N à l'ébullition d'au moins 99,9%.

D'autres caractéristiques et avantages de l'invention apparaîtront mieux à la lecture des exemples suivants donnés bien entendu à titre illustratif et non limitatif.

EXEMPLE 1 : Préparation d'uranate plutonate d'ammonium.

On part d'une solution aqueuse contenant 1 mol/l d'acide nitrique et 200 g/l au total d'uranium VI et de plutonium IV, le rapport en poids U/Pu étant égal à 3. On réalise l'oxydation du plutonium IV présent dans cette solution par électrolyse en présence du couple oxydoréducteur $Ag^+/Ag^{2+}$.

Dans ce but, on ajoute à la solution $5.10^{-2}$ mol/l de nitrate d'argent $AgNO_3$ et on oxyde le plutonium IV en plutonium VI dans un électrolyseur comportant une anode en platine en utilisant les conditions d'électrolyse suivantes :
- surface d'anode : 8 cm²
- intensité du courant : 60 mA.

On arrête l'électrolyse lorsque l'anolyte noircit en raison de la formation d'ions $Ag^{2+}$ qui n'apparaissent qu'à la fin de la réaction d'oxydation du plutonium IV.

On introduit alors dans la solution de l'ammoniac gazeux par barbotage jusqu'à l'obtention d'un pH voisin de 9,2 à 9,3 que l'on mesure au moyen d'une électrode de verre. Cette addition de gaz ammoniac dure environ 20 min et elle est réalisée à la température ambiante.

Il se forme un précipité que l'on laisse mûrir sous agitation pendant 2h.

On filtre alors le précipité et on détermine les concentrations en uranium et en plutonium des eaux mères. Celles-ci sont de :
- 0,080 g/l d'uranium VI, et
- 0,324 g/l de plutonium VI.

Les rendements de précipitation sont ainsi égaux à :
- rendement en uranium : 99,94 %,
- rendement en plutonium : 99,35%.

Le rendement de précipitation global (U + Pu) est ainsi égal à 99,8%.

On observe par ailleurs que les ions $Ag^+$ présents dans la solution initiale restent quantitativement dans les eaux mères de précipitation, probablement sous forme de complexes aminés de $Ag^+$.

EXEMPLE 2 : Préparation d'uranate plutonate mixte d'ammonium.

On suit le même mode opératoire que dans l'exemple 1 en partant d'une solution de nitrate d'uranyle et de nitrate de plutonium dont la teneur totale en (U VI + Pu IV) est de 61,3 g/l avec un rapport en poids U/Pu = 3, ayant une concentration en acide nitrique d'1 mol/l. On ajoute à la solution 0,05 mol/l de nitrate d'argent et on réalise ensuite l'oxydation du Pu IV en Pu VI par électrolyse et la précipitation de l'uranate plutonate d'ammonium dans les mêmes conditions que celles de l'exemple 1.

Après filtration du précipité, on détermine les concentrations en plutonium VI et en uranium VI des eaux mères de filtration. La concentration en plutonium VI est de 1,24 mg/l et l'uranium VI n'est pas décelable.

Ainsi, le rendement global de précipitation est supérieur à 99,99%.

En suivant le même mode opératoire, on réalise la coprécipitation de l'uranium et du plutonium en partant de solutions dont les concentrations en uranium + plutonium varient de 60 à 200 g/l.

On constate que dans ces conditions, le rendement global de précipitation décroît régulièrement avec l'accroîssement de la concentration en uranium et plutonium de la solution. Il reste néanmoins excellent et toujours supérieur à 99,7%.

EXEMPLE 3 : Préparation d'uranate plutonate d'ammonium.

On suit le même mode opératoire que dans l'exemple 1 pour précipiter de l'uranate plutonate d'ammonium à partir d'une solution contenant 69 g/l au total d'uranium et de plutonium avec un rapport en poids U/Pu de 3,2 et une concentration en acide nitrique de 1 mol/l.

On réalise l'oxydation et la précipitation dans les mêmes conditions que celles de l'exemple 2. On obtient ainsi un coprécipité d'uranate plutonate mixte d'ammonium que l'on identifie par diffraction aux rayonx X.

Le composé obtenu présente un diffractogramme homologue de celui qui correspond au diuranate d'ammonium, ce qui montre que les deux composés sont isomorphes. Les raies diffractées les plus intenses correspondent aux distances interréticulaires suivantes :
- d(Å) = 7,443 (100%) ; 3,210 (50%) ; 3,559 (40%).

Les distances interréticulaires équivalentes du diuranate d'ammonium ont été trouvées égales à :
- d (Å) = 7,455 (100%) ; 3,231 (50%) ; 3,584 (40%).

EXEMPLE 4 : Préparation d'oxyde mixte d'uranium

plutonium $(U,Pu)O_2$.

On forme un précipité d'uranate plutonate d'ammonium en suivant le même mode opératoire que dans l'exemple 1 et en utilisant comme produit de départ une solution ayant la composition suivante :

$(U + Pu)$ = 115,06 g/l,

$U/Pu$ = 2,63,

$HNO_3$ = 1 mol/l.

On réalise l'oxydation et la précipitation par de l'ammoniac gazeux dans les mêmes conditions que celles de l'exemple 1. Le rendement global de précipitation est de 99,89%.

On sèche ensuite le précipité à 100°C pendant une demi-heure, puis on le calcine à 700°C pendant trois heures en présence d'un mélange gazeux hydrogène-argon contenant 10% en volume d'hydrogène. Après refroidissement sous atmosphère réductrice jusqu'à 60°C et sous air jusqu'à la température ambiante, on soumet l'oxyde mixte $(U,Pu)O_2$ obtenu à une analyse aux rayons X.

Le diffractogramme de l'oxyde mixte est homologue de celui qui correspond au bioxyde d'uranium $UO_2$. Ceci montre que les deux oxydes sont isomorphes. Ils cristallisent dans le système cubique à faces centrées et les principales distances interréticulaires observées, correspondant aux raies diffractées les plus intenses, sont :

$(U,Pu)O_2$ : $d(\text{Å})$ = 3,135 ; 2,717 ; 1,920 ; 1,636,

$UO_2$ : $d(\text{Å})$ = 3,135 ; 2,721 ; 1,927 ; 1,644.

On soumet ensuite l'oxyde mixte ainsi obtenu à un essai de dissolution au moyen d'acide nitrique exempt d'ions fluorure, en réalisant la dissolution dans les conditions suivantes :

On introduit dans 5 ml d'une solution à 11,3 mol/l d'acide nitrique 50 mg de l'oxyde mixte $(U,Pu)O_2$ et on porte à l'ébullition au reflux pendant 6 heures.

On refroidit alors la solution. On la dilue à l'eau froide d'un facteur égal à 2 et on la filtre sur un filtre Millipore de 0,45 $\mu$m.

Après rinçage à l'acide dilué, on attaque le filtre par 5 ml d'une solution à 6 mol/l d'acide nirique contenant 0,05 mol/l d'ions fluorure, en opérant à l'ébullition à reflux pendant 1h.

On détermine alors la teneur en plutonium de la solution. Celle-ci correspond à 0,1% de la quantité initiale de plutonium contenue dans l'oxyde mixte soumis à l'essai de dissolution. On remarque ainsi que cet oxyde mixte présente une excellente solubilité en milieu nitrique et donc une bonne homogénéité.

**Revendications**

1. Uranate plutonate d'ammonium de formule :

$$[(U, Pu)O_3]_2 \, [NH_3]_x \, [H_2O]_y$$

dans laquelle x et y ont une valeur comprise entre 0 et 5 avec $x + y = 5$

2. Procédé de préparation d'uranate plutonate d'ammonium, selon la revendication 1 caractérisé en ce qu'il consiste à neutraliser par l'ammoniac une solution aqueuse d'un sel d'uranium VI et d'un sel de plutonium VI pour précipiter l'uranium et le plutonium sous la forme d'un coprécipité d'uranate plutonate d'ammonium, et à séparer le coprécipité de la solution.

3. Procédé selon la revendication 2, caractérisé en ce que les sels d'uranium et de plutonium sont du nitrate d'uranyle et du nitrate de plutonyle.

4. Procédé selon la revendication 3, caractérisé en ce qu'il comprend les étapes successives suivantes :

   a) - préparer une solution de nitrate d'uranyle et de nitrate de plutonium (IV),

   b) - oxyder le plutonium IV présent dans la solution en plutonium VI, et

   c) - neutraliser la solution par addition d'ammoniac pour former un coprécipité d'uranate plutonate d'ammonium.

5. Procédé selon la revendication 4, caractérisé en ce que l'on réalise l'oxydation du plutonium IV en plutonium VI par addition d'ions $NO_3^-$ à température élevée.

6. Procédé selon la revendication 4, caractérisé en ce que l'on réalise l'oxydation du plutonium IV en plutonium VI par électrolyse.

7. Procédé selon la revendication 6, caractérisé en ce que l'on réalise l'électrolyse en présence d'un médiateur électrochimique ayant un potentiel d'oxydoréduction supérieur à celui du couple plutonium IV-plutonium VI.

8. Procédé selon la revendication 4, caractérisé en ce que l'on réalise l'oxydation du plutonium IV en plutonium VI par addition d'oxyde d'argent AgO.

9. Procédé selon la revendication 4, caractérisé en ce que l'on réalise l'oxydation du plutonium IV en plutonium VI au moyen d'ozone.

10. Procédé selon l'une quelconque des revendications 2 et 4, caractérisé en ce que l'on réalise la neutralisation au moyen d'ammoniac gazeux.

11. Procédé selon l'une quelconque des revendicationns 2 et 4, caractérisé en ce que l'on réalise la neutralisation par addition d'une solution aqueuse d'ammoniaque.

12. Procédé selon la revendication 11, caractérisé en ce que l'on réalise la neutralisation de façon à obtenir un pH allant de 9,2 à 9,3.

13. Procédé de préparation d'oxyde mixte (U,Pu)-O$_2$, caractérisé en ce qu'il consiste à calciner sous atmosphère réductrice un coprécipité d'uranate plutonate d'ammonium , selon la revendication 1.

**Claims**

1. Ammonium plutonate uranate of formula:

$$((U,Pu)O_3)_2 \ (NH_3)_x \ (H_2O)_y$$

in which x and y have a value between 0 and 5 with x + y = 5.

2. Process for the preparation of ammonium plutonate uranage according to claim 1, characterized in that it comprises neutralizing by ammonia an aqueous solution of a uranium VI salt and a plutonium VI salt for precipitating the uranium and plutonium in the form of an ammonium plutonate uranate coprecititate and for separating the coprecipitate from the solution.

3. Process according to claim 2, characterized in that the uranium and plutonium salts are uranyl nitrate and plutonyl nitrate.

4. Process according to claim 3, characterized in that it comprises following stages:
   a) preparing a solution of uranyl nitrate and plutonium IV nitrate
   b) oxidizing the plutonium IV present in the folution into plutonium VI and
   c) neutralizing the solution by adding ammonia to form an ammonium plutonate uranate coprecipitate.

5. Process according to claim 4, characterized in that the plutonium IV is oxidized into plutonium VI by adding NO$_3$- ions at elevated temperature.

6. Process according to claim 4, characterized in that the oxidation of plutonium IV into plutonium VI is carried out by electrolysis.

7. Process according to claim 6, characterized in that electrolysis is carried out in the presence of an electrochemical mediator with a redox potential above that of the plutonium IV - plutonium VI pair.

8. Process according to claim 4, characterized in that oxidation of plutonium IV into plutonium VI takes place by adding silver oxide AgO.

9. Process according to claim 4, characterized in that plutonium IV is oxidised into plutonium VI by means of ozone.

10. Process according to either of the claims 2 and 4, characterized in that neutralization takes place by means of gaseous ammonia.

11. Process according to either of the claims 2 and 4, characterized in that neutralization takes place by adding an aqueous ammonia solution.

12. Process according to claim 11, characterized in that neutralization is carried out so as to obtain a pH between 9.2 and 9.3.

13. Process for the preparation of the mixed oxide (U,Pu)O$_2$, characterized in that it comprises calcining under a reducing atmosphere an ammonium plutonate uranate coprecipitate, according to claim 1.

**Patentansprüche**

1. Ammoniumuranatplutonat der Formel

$$[(U, Pu)O_3]_2 \ [NH_3]_x \ [H_2O]_y$$

worin x und y einen Wert zwischen 0 und 5 mit x + y = 5 besitzen.

2. Verfahren zur Herstellung von Ammoniumuranatplutonat nach Anspruch 1, dadurch gekennzeichnet, daß es daraus besteht, eine wäßrige Lösung eines Uran(VI)-Salzes und eines Plutonium(VI)-Salzes mit Ammoniak zu neutralisieren, um das Uran und das Plutonium in Form eines gemeinsamen Niederschlages von Ammoniumuranatplutonat auszufällen und den gemeinsamen Niederschlag von der Lösung abzutrennen.

3. Verfahren gemaß Anspruch 2, dadurch gekennzeichnet, daß die Uran- und Plutoniumsalze Uranylnitrat und Plutonylnitrat sind.

4. Verfahren gemäß Anspruch 3, dadurch gekennzeichnet, daß es die folgenden aufeinanderfolgenden Schritte umfaßt:

a) - Herstellen einer Lösung von Uranylnitrat und Plutonium(IV)-nitrat,

b) - Oxydieren des in der Lösung vorhandenen Plutonium(IV) zu Plutonium(VI) und

c) - Neutralisieren der Lösung durch Zugabe von Ammoniak, um einen gemeinsamen Niederschlag von Ammoniumuranatplutonat zu bilden.

5. Verfahren gemäß Anspruch 4, dadurch gekennzeichnet, daß man die Oxydation von Plutonium(IV) zu Plutonium(VI) durch Zugabe von $NO_3^-$-Ionen bei erhöhter Temperatur bewerkstelligt.

6. Verfahren gemäß Anspruch 4, dadurch gekennzeichnet, daß man die Oxydation von Plutonium(IV) zu Plutonium(VI) durch Elektrolyse bewerkstelligt.

7. Verfahren gemäß Anspruch 6, dadurch gekennzeichnet, daß man die Elektrolyse in Anwesenheit eines elektrochemischen Vermittlers mit einem höheren Redoxpotential als das der Paarung Plutonium(IV)-Plutonium(VI) ausführt.

8. Verfahren gemäß Anspruch 4, dadurch gekennzeichnet, daß man die Oxydation von Plutonium(IV) zu Plutonium(VI) durch Zugabe von Silberoxid AgO bewerkstelligt.

9. Verfahren gemäß Anspruch 4, dadurch gekennzeichnet, daß man die Oxydation von Plutonium(IV) zu Plutonium(VI) mittels Ozon bewerkstelligt.

10. Verfahren gemäß einem der Ansprüche 2 und 4, dadurch gekennzeichnet, daß man die Neutralisation mittels gasförmigen Ammoniaks bewerkstelligt.

11. Verfahren gemäß einem der Ansprüche 2 und 4, dadurch gekennzeichnet, daß man die Neutralisation durch Zugabe einer wäßrig-ammoniakalischen Lösung bewerkstelligt.

12. Verfahren gemäß Anspruch 11, dadurch gekennzeichnet, daß man die Neutralisation derart durchführt, daß man einen pH von 9,2 bis 9,3 erhält.

13. Verfahren zur Herstellung von $(U,Pu)O_2$-Mischoxid, dadurch gekennzeichnet, daß es aus dem Glühen eines gemeinsamen Niederschlages von Ammoniumuranatplutonat nach Anspruch 1 in einer reduzierenden Atmosphäre besteht.